# EUROPEAN PATENT APPLICATION

(11) **EP 3 845 875 A1**
(43) Date of publication of application: **07.07.2021**
(21) Application number: 20213065.4
(22) Date of filing: 10.12.2020
(51) Int. Cl.: G01G 7/04, G01G 21/24

(54) **WEIGH MODULES**

(30) Priority: 31.12.2019 CN 201911412205
(71) Applicant: Mettler Toledo Instrument (Shanghai) Company Limited, Shanghai 200233 (CN)
(72) Inventor: WU, Chao, Shanghai, Shanghai (CN); LIU, Baohui, Shanghai, Shanghai (CN); SUN, Weixiang, Shanghai, Shanghai (CN); XU, Feng, Shanghai, shanghai (CN); YANG, Chun, Shanghai, shanghai (CN); BIAN, Naifeng, Shanghai, shanghai (CN)
(74) Representative: Mettler-Toledo

(57) **Abstract**

The present invention discloses a weigh module (1), comprising a load-receiving portion (11), a fixing portion (12), a parallel guide portion for connecting the load-receiving portion (11) and the fixing portion (129, and a lever system, wherein the lever system comprises a first lever (141) and a second lever (142); the load-receiving portion (11) extends towards the fixing portion (12) to form a load-receiving portion additional portion(112); the fixing portion (12) extends towards the load-receiving portion (11) to form a fixing portion extension portion (125); one end of the first lever (1412) is respectively connected to the load-receiving portion additional portion (112) and the fixing portion extension portion (125), with joints thereof being both of a thin sheet structure; the other end of the first lever (1413) is connected to one end of the second lever (1422), and the end of the second lever (1422) is further connected to the fixing portion extension portion (125), with joints thereof also being both of a thin sheet structure; the other end of the second lever (1423) is configured to be connected to a magnetic system; and the weigh module (1) is integrally manufactured. The use of the structure according to the present invention can meet design requirements of large range and small size of sensors.

## Description

### Technical Field

The present invention relates to a weigh module, and in particular to a weigh module with the principle of electromagnetic force compensation.

### Background Art

At present, electromagnetic force compensation type weigh modules commonly used in electronic balances have different requirements in structure and range according to different service conditions. The working principle of the electromagnetic force compensation type weigh modules is based on the lever principle, and uses a small electromagnetic force to balance a relatively large loading force. For some weigh modules with a simple structure and a low range, a single lever structure can meet the weighing requirements. However, for weigh modules with a large capacity and a small size, the single lever structure often cannot meet the requirements, so it is necessary to use the form of two or more levers to achieve a larger lever ratio. The two-stage lever structure in the existing weigh module technology often uses a separated die-casting structure, and several major components on the weigh module, such as the load-receiving portion, a parallel guide portion, a fixing portion, and a lever, are respectively formed by die-casting and then connected together by means of screws, etc. The whole weigh module has a complex structure and numerous parts, and is time-consuming in assembly and high in cost.

### Summary of invention

The technical problem to be solved by the present invention is to provide a weigh module to solve the problem in the prior art that a weigh module has a complex structure and numerous parts and is time-consuming in assembly and high in cost.

The present invention solves the above technical problem through the following technical solution:
providing a weigh module, comprising a load-receiving portion, a fixing portion, a parallel guide portion for connecting the load-receiving portion and the fixing portion, and a lever system, characterized in that the lever system is arranged in a space defined by the load-receiving portion, the fixing portion and the parallel guide portion and forms a gap from the load-receiving portion, the fixing portion and the parallel guide portion, and the lever comprises a first lever and a second lever;
the load-receiving portion extends towards the fixing portion to form a load-receiving portion additional portion; the fixing portion extends towards the load-receiving portion to form a fixing portion extension portion; a gap is formed between the load-receiving portion additional portion and the fixing portion extension portion; a gap is also formed between the lever system and the load-receiving portion additional portion and the fixing portion extension portion;
one end of the first lever is respectively connected to the load-receiving portion additional portion and the fixing portion extension portion, with joints thereof being both of a thin sheet structure;
the other end of the first lever is connected to one end of the second lever, and the end of the second lever is further connected to the fixing portion extension portion, with joints thereof also being both of a thin sheet structure;
the other end of the second lever is configured to be connected to a magnetic system; and the weigh module is integrally manufactured.

In this solution, with the gap formed between the load-receiving portion additional portion and the fixing portion extension portion, the load-receiving portion additional portion and the fixing portion extension portion are separated from each other, and the size of the gap in this solution varies according to the design requirements of the lever structure.

In this solution, the load-receiving portion additional portion and the fixing portion extension portion are located in the space defined by the load-receiving portion, the fixing portion, and the parallel guide portion so as to, combined with the lever structure design, implement the precise force transmission and amplification.

In this solution, the thin sheet structure is implemented by making the joint between the components into a thin sheet by means of cutting, etc., thereby implementing the function of a fulcrum or better force transmission.

With the design of this solution, a force loaded by the load-receiving portion is transmitted to the first lever, and the force is diminished for the first time by using the fulcrum formed by the first lever and the fixing portion extension portion and transmitted to the second lever through the connection with the second lever. Then the force is diminished again by using the fulcrum formed by the second lever and the fixing portion extension portion and transmitted to the magnetic system, the two stages of levels are kept in a balanced state based on the electromagnetic force balance principle, and then the force loaded by the load-receiving portion is precisely measured through the proportional relationship between the force generated by the magnetic system and the lever.

In this solution, the load-receiving portion, the fixing portion, the parallel guide portion for connecting the load-receiving portion and the fixing portion, and the lever are integrally formed by means of integrated machining technology. Thus, the design of the overall structure of the sensor is more compact and is space-saving. Moreover, the integral forming design needs few types and a small number of parts, so the costs of machining, assembly, logistics, etc. are also lower.

Further, the fixing portion is provided with an opening, a slot or a through hole, and the second lever extends from one side to the other side of the fixing portion through the opening, the slot or the through hole.

In this solution, the second lever is designed to extend to the outer side of the fixing portion, thereby facilitating the assembly of the lever and the magnetic system.

Still further, one side of the fixing portion away from the load-receiving portion is provided with a magnetic system mounting portion.

Further, the other end of the second lever is connected to a coil connection portion, which is placed in the magnetic system.

In this solution, one end of the second lever is connected to the coil connection portion mounted in the magnetic system, such that the force generated by the magnetic system is transmitted to the second lever through the coil connection portion mounted with a coil, so as to keep the force balance between the first lever and the second lever.

Still further, the second lever and the coil connection portion are integrally formed.

In this solution, the second lever and the coil connection portion are integrally formed, thereby reducing the number of mounted parts. Moreover, the structure of the magnetic system is also simplified.

Further, the thin sheet structure is provided with at least one open slot from one side of the joint facing the load-receiving portion, or is provided with at least one open slot from one side of the joint facing the fixing portion, or is provided with at least one open slot from both sides of the joint facing the load-receiving portion and the fixing portion.

Further, the length from the joint between the first lever and the load-receiving portion additional portion to the joint between the first lever and the fixing portion extension portion is less than the length from the joint between the first lever and the second lever to the joint between the first lever and the fixing portion extension portion; and/or

the length from the joint between the first lever and the second lever to the joint between the second lever and the fixing portion extension portion is less than the length from the gravity center of the magnetic system connected to the second lever to the joint between the second lever and the fixing portion extension portion.

In this solution, the total lever ratio of the two stages of levers is increased by means of adjusting the ratio of the levers at two sides of the fulcrums.

The positive improvement effect of the present invention is as follows:
with the weigh module structure according to the present invention, a weigh module with a smaller size and a larger lever ratio can be obtained, and an integrated computer numerical control (CNC) machining form is used, such that the overall structure of the sensor is more compact and space-saving, and the types of parts are effectively reduced, thereby reducing costs of design, machining, assembly, logistics, etc. The use of the structure according to the present invention can meet design requirements of large range and small size of sensors.

### Brief description of drawings

The above and other features, properties and advantages of the present invention will become clearer based on the description below in conjunction with the accompanying drawings and embodiments, and the same reference numerals in the figures always represent the same features. In the figures:
- Fig. 1: is a schematic diagram of a weigh module according to an embodiment of the present invention;
- Fig. 2: is a schematic perspective sectional view of the weigh module according to the embodiment of the present invention; and
- Fig. 3: is a schematic diagram of a second lever and a coil connection portion according to another embodiment of the present invention.

### Description of embodiments

The present invention will be further described below by way of examples, but the present invention is not therefore limited to the scope of the described embodiments.

According to the present invention, an integrated CNC machining form is used to effectively reduce the types of parts, thereby reducing the costs of design, machining, assembly, logistics, etc. Moreover, the connection and fulcrum functions of conventional flexure hinges are implemented through the connection between components in the weigh module by means of cutting, thereby avoiding the performance difference and unreliability caused by assembly.

Hereinafter, the implementation of the present invention will be illustrated by way of example via the following embodiments.

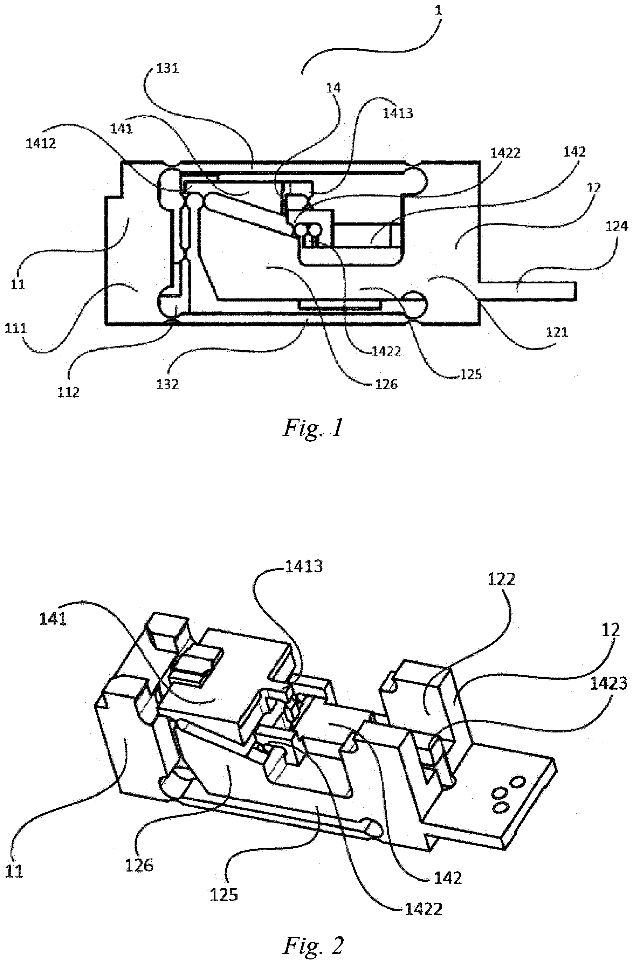

With regard to embodiments shown in Fig. 1 and Fig. 2, a weigh module 1 of this embodiment comprises a load-receiving portion 11, a fixing portion 12, a parallel guide portion for connecting the load-receiving portion 11 to the fixing portion 12, and a lever system 14.

The parallel guide portion connects the fixing portion 12 and the load-receiving portion 11 together. The parallel guide portion comprises an upper parallel guide unit 131 and a lower parallel guide unit 132 parallel to each other, with two ends of the upper parallel guide unit 131 and the lower parallel guide unit 132 being respectively connected to the load-receiving portion 11 and the fixing portion 12. The ends of the upper parallel guide unit 131 connected to the load-receiving portion 11 and the fixing portion 12 are cut into a thin sheet structure, and the function of the thin sheet structure is the same as that of a connecting flexure hinge in a weigh module assembled in the prior art, which will not be repeated here. In this embodiment, by means of cutting into the sheet structure, the weigh module is formed as an integrated structure by machining or by die-casting combined with machining. In this embodiment, the ends of the lower parallel guide unit 132 connected to the load-receiving portion 11 and the fixing portion 12 are also cut into a sheet structure. In this embodiment, the parallel guide portion, the fixing portion 12 and the load-receiving portion 11 form an integrated structure.

In this embodiment, two ends of the upper parallel guide unit 131 and the lower parallel guide unit 132 connected to the load-receiving portion 11 and the fixing portion 12 respectively have the same cross-sectional length. For example, the upper parallel guide unit 131 and the lower parallel guide unit 132 form a rectangle-like shape between the load-receiving portion 11 and the fixing portion 12. In another embodiment, the upper parallel guide unit 131 and the lower parallel guide unit 132 forming a rectangle-like shape are each further provided with openings or open holes. In another variant embodiment, the number and shape of the openings or open holes in the upper parallel guide unit 131 and the lower parallel guide unit 132 can be adjusted arbitrarily.

In a further embodiment, when the two ends of the upper parallel guide unit 131 respectively connected to the load-receiving portion 11 and the fixing portion 12 have different cross-sectional lengths, in a direction from the end connected to the load-receiving portion 11 to the end connected to the fixing portion 12, the distance between two sides of the upper parallel guide unit 131 gradually converts from the cross-sectional length of the end connected to the load-receiving portion to the cross-sectional length of the end connected to the fixing portion. In a variant embodiment, the lower parallel guide unit 132 and the upper parallel guide unit 131 have the same shape.

In this embodiment, one end of a load-receiving portion main body portion 111 of the load-receiving portion 11 connected to the lower parallel guide unit 132 extends towards the fixing portion 12 along the lower parallel guide unit 132 to form a load-receiving portion additional portion 112. As shown in FIGS. 1 and 2, in this embodiment, the load-receiving portion additional portion 112 is located in a groove formed in a plane where the lower parallel guide unit 132 is located, so the cross-sectional area of the load-receiving portion additional portion 112 is smaller than that of the load-receiving portion main body portion 111. The load-receiving portion additional portion 112 is connected to one end of the lever 14 close to the load-receiving portion 11 via a connecting portion. The connecting portion connected to the lever 14 is also cut into a thin sheet structure, and the cut thin sheet portion implements the function of a connecting flexure hinge between the load-receiving portion additional portion 112 and the lever 14.

In this embodiment, a plurality of grooves are formed by cutting in the connecting portion to adjust the stress on the connecting portion, and those person skilled in the art would have been able to adjust the number, position, and size of the grooves according to the actual stress distribution on the connecting portion. For example, in another embodiment, the connecting portion is provided, at one side thereof facing the load-receiving portion 11, with 2-3 grooves of the same size uniformly distributed in the lengthwise direction of the connecting portion so as to adjust the stress on the connecting portion.

In addition, the joints between the components are each cut into a sheet based on the existing machining process and requirements of weigh modules.

A fixing portion body portion 121 of the fixing portion 12 extends outwards in the lengthwise direction of the parallel guide portion for mounting a mounting portion 124 of a magnetic system. Upper and lower sides of the joint between the fixing portion body portion 121 and the mounting portion 124 are respectively provided with a first groove 122 and a second groove (not visible in the figure).

The fixing portion body portion 121 of the fixing portion 12 also extends towards the load-receiving portion 11 in a lengthwise direction of the parallel guide portion to form a first extension portion 125. The first extension portion 125 of the fixing portion 12 further extends towards the lever 14 and the load-receiving portion 11 to form a second extension portion 126. The first extension portion 125 and the second extension portion 126 of the fixing portion 12 are located between the upper parallel guide unit 131 and the lower parallel guide unit 132 which the parallel guide units are separated from each other. The second extension portion 126 and the load-receiving portion 11 are separated from each other so as to form a gap between the second extension portion 126 and the load-receiving portion 11.

A spatial distance formed between the upper parallel guide unit 131 and the first extension portion 125 and the second extension portion 126 of the fixing portion 12 is large enough, as shown in FIGS. 1 and 2, such that the lever 14 can be placed in a space formed by the combination of the fixing portion body portion 121, the upper parallel guide unit 131, and the first extension portion 125 and the second extension portion 126 of the fixing portion 12. In this embodiment, with such an arrangement structure, the weigh module has a compact structure and small size, is easy in machining and mounting, and has better performance.

In this embodiment, the lever 14 has a two-stage lever structure, the lever 14 and the load-receiving portion additional portion 112 are connected to one end 1412 of a body portion of a first lever 141, the joint between the load-receiving portion additional portion 112 and the end 1412 is cut into a thin sheet structure, and the cut sheet portion implements the function of a connecting flexure hinge between the load-receiving portion additional portion 112 and the first lever 141 of the lever 14.

The other end 1413 of the first lever 141 is connected to an end 1422 of a second lever 142 via a connecting portion, the connecting portion is cut into a thin sheet structure, and the cut thin sheet portion implements the function of a connecting flexure hinge between the first lever 141 and the second lever.

The first lever 141 is also connected to the second extension portion 126 of the fixing portion 12 via the end 1412. The joint between the end 1412 and the second extension portion 126 is cut into a thin sheet structure, and the function of the thin sheet structure is the same as that of a fulcrum flexure hinge in a weigh module assembled in the prior art, which will not be repeated here. That is to say, the cut sheet structure implements the function of a fulcrum of the first lever 141 on the second extension portion 126, such that the force loaded by the load-receiving portion 11 is diminished through the lever action of the joint between the end 1412 having the fulcrum function and the second extension portion 126 and is then transmitted to the second lever 142.

A gap is formed between the second extension portion 126 and a connecting portion between the load-receiving portion additional portion 112 and the first lever, so a gap is also formed between the joint between the end 1412 and the second extension portion 126 and the joint between the load-receiving portion additional portion 112 and the end 1412.

The end 1422 of the first lever 142 is also connected to the second extension portion 126 of the fixing portion 12. The joint between the end 1422 and the second extension portion 126 is cut into a sheet structure, and the cut sheet structure implements the function of a fulcrum of the second lever 142 on the second extension portion 126. Therefore, the force transmitted by the first lever is diminished through the lever having the fulcrum function, between the end 1422 and the second extension portion 126 and is then transmitted to the other end 1423 of the second lever 142. Then the electromagnetic force received at the other end 1423 of the second lever 142 is calculated based on the electromagnetic force balance principle, and further the force actually loaded on the load-receiving portion 11 is obtained based on the amplification ratio of lever.

A gap is formed between the end 1422 and the second extension portion 126 and the joint between the end 1413 of the first lever 141 and the end 1422 of the second lever 142. The joint between the end 1422 and the second extension portion 126 is closer to the load-receiving portion 11 than the joint between the end 1413 of the first lever 141 and the end 1422 of the second lever 142.

That is to say, the level ratio of the first lever is formed by the length from the joint between the first lever and the load-receiving portion additional portion to the joint between the first lever and the fixing portion extension portion and the length from the joint between the first lever and the second lever to the joint between the first lever and the fixing portion extension portion; and the level ratio of the second lever is formed by the length from the joint between the first lever and the second lever to the joint between the second lever and the fixing portion extension portion and the length from the gravity center of the magnetic system connected with the second lever to the joint between the second lever and the fixing portion extension portion. Through the linkage of the two stages of levers, the total lever ratio of the lever 14 is the product of the lever ratio of the first lever and the lever ratio of the second lever, and thus a greater lever ratio is obtained.

The other end 1423 of the second lever 142 passes through the first groove 122 and is connected to the magnetic system located at the mounting portion 124. With the two-stage level structure of this embodiment, the overall structure of the weigh module is more compact and space-saving.

In this embodiment, the connection and fulcrum between components are implemented by using the cutting way. That is to say, in this embodiment, the fixing portion 12, the parallel guide portion, the load-receiving portion 11 and the lever 14 form an integrated structure. In the manufacturing process, by means of pre-machining at the position of the sheet, the number of parts in the weigh module is reduced, and the cost and assembly time are saved.

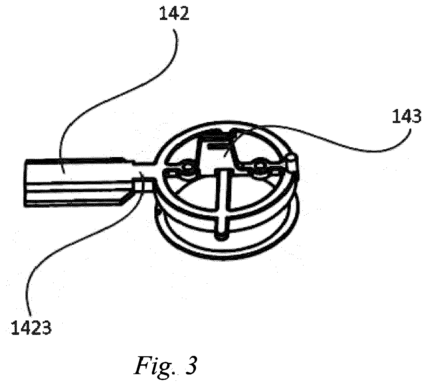

In particular, in this embodiment, the first lever 141 and the second lever 142 are integrally formed. Therefore, the lever structure is more compact, and the number of parts assembled is reduced. In another embodiment, as shown in Fig. 3, the second lever 142 and the coil connection portion 143 are connected at the end 1423 and are integrally formed. In this embodiment, compared with the foregoing embodiment, the lever and the coil connection portion are of an integrated structure, such that the lever structure is more compact, and the number of parts assembled is reduced.

Of course, the specific shape of the lever 14 is not limited in the foregoing embodiments, and those skilled in the art would have been able to arbitrarily adjust the shape and size of the lever 14 according to an actual shape of a lever accommodation space of the weigh module and the shape and size of the opening of the lever accommodation space.

The weigh module in the foregoing embodiments has an integrated structure, that is, the weigh module is formed of a whole piece of material by integral molding. The above integrated structure may be an integrated structure formed by die-casting, or may be an integrated structure formed by machining, or may be an integrated structure formed by die-casting combined with machining. According to the design of the foregoing embodiments, a greater lever ratio is obtained within a limited size range. Moreover, an integrated CNC machining method effectively reduces the types of parts, thereby reducing the costs of design, machining, assembly, logistics, etc.

Although specific implementations of the present invention have been described above, those skilled in the art should understand that these are merely examples, and the scope of protection of the present invention is defined by the appended claims. Those skilled in the art would have been able to make various changes or modifications to these embodiments without departing from the principles and essence of the present invention, but all these changes and modifications fall within the scope of protection of the present invention.

### Reference signs list

- 1: Weigh module
- 11: Load-receiving portion
- 111: Load-receiving portion main body portion
- 112: Load-receiving portion additional portion
- 12: Fixing portion
- 121: Fixing portion body portion
- 122: First groove
- 124: Mounting portion
- 125: First extension portion
- 126: Second extension portion
- 131: Upper parallel guide unit
- 132: Lower parallel guide unit
- 14: Lever
- 141: First lever
- 1412: One end of the first lever
- 1413: The other end of the first lever
- 142: Second lever
- 1422: One end of the second lever
- 1423: The other end of the second lever
- 143: Coil connection portion

## Claims

1. A weigh module (1), comprising
a load-receiving portion (11),
a fixing portion (12),
a parallel guide portion for connecting the load-receiving portion (11) and the fixing portion (12), and
a lever system,
the weight module (1) is **characterized in that**
the lever system is arranged in a space defined by the load-receiving portion (11), the fixing portion (12) and the parallel guide portion and forms a gap from the load-receiving portion (11), the fixing portion (12) and the parallel guide portion, and the lever system comprises a first lever (141) and a second lever (142);
the load-receiving portion (11) extends towards the fixing portion (12) to form a load-receiving portion additional portion (112);
the fixing portion (12) extends towards the load-receiving portion (11) to form a fixing portion extension portion (125);
a gap is formed between the load-receiving portion additional portion (112) and the fixing portion extension portion (125);
a gap is also formed between the lever system and the load-receiving portion additional portion (112) and the fixing portion extension portion (125);
one end of the first lever (1412) is respectively connected to the load-receiving portion additional portion (112) and the fixing portion extension portion (125), with joints thereof
being both of a thin sheet structure;
the other end of the first lever (1413) is connected to one end of the second lever (1422), and the end of the second lever (1422) is further connected to the fixing portion extension portion (125), with joints thereof also being both of a thin sheet structure;
the other end of the second lever (1423) is configured to be connected to a magnetic system; and **in that**
the weigh module (1) is integrally manufactured as one piece.

2. The weigh module according to claim 1, **characterized in that**
the fixing portion (12) is provided with an opening, a slot or a through hole, and the second lever extends (142) from one side to the other side of the fixing portion (12) through said opening, slot or through hole.

3. The weigh module according to claim 2, **characterized in that**
the side of the fixing portion (12) which is facing away from the load-receiving portion (11) is provided with a magnetic system mounting portion (124).

4. The weigh module according to claim 2, **characterized in that**
the other end of the second lever (1423) is connected to a coil connection portion (143), which is located in the magnetic system.

5. The weigh module according to claim 4, **characterized in that**
the second lever (142) and the coil connection portion (143) are integrally formed.

6. The weigh module according to claim 1, **characterized in that**
the thin sheet structure is provided with
at least one open slot at one side of the joint facing the load-receiving portion (11), or
at least one open slot at one side of the joint facing the fixing portion (12), or
at least one open slot at both sides of the joint facing the load-receiving portion (11) and the fixing portion (12).

7. The weigh module according to any one of claims 1-6, **characterized in that**
the length from the joint between the first lever (141) and the load-receiving portion additional portion (112) to the joint between the first lever (141) and the fixing portion extension portion (125) is less than the length from the joint between the first lever (141) and the second lever (142) to the joint between the first lever (141) and the fixing portion extension portion (125); and/or
the length from the joint between the first lever (141) and the second lever (142) to the joint between the second lever (142) and the fixing portion extension portion (125) is less than the length from the gravity center of the magnetic system connected to the second lever (142) to the joint between the second lever (142) and the fixing portion extension portion (125).
